# EUROPEAN PATENT SPECIFICATION

(11) **EP 1 984 866 B1**
(45) Date of publication and mention of the grant of the patent: **02.11.2011**
(21) Application number: 06727110.6
(22) Date of filing: 12.05.2006
(51) Int. Cl.: G06F 21/24

(54) **DOCUMENT SECURITY MANAGEMENT SYSTEM**
DOKUMENTSICHERHEITSVERWALTUNGSSYSTEM
SYSTÈME DE GESTION DE SÉCURITÉ DE DOCUMENTS

(30) Priority: 07.02.2006 IN MU01832006
(43) Date of publication of application: 29.10.2008
(73) Proprietor: Nextenders (India) Private Limited, Mumbai 400 049 (IN)
(72) Inventor: SHEVADE, Ravindra, Waman, Maharashtra 400 601 (IN)
(74) Representative: DeVile, Jonathan Mark
(86) International application number: PCT/GB2006/001766
(87) International publication number: WO 2007/091002

(56) References cited:
- EP-A- 0 647 895
- WO-A-00/62220
- WO-A-01/52473

## Description

### Field of Invention

The present invention relates to document security management systems for securely managing documents for users.

In one embodiment a document security management system is provided on a client-server arrangement, in which client terminals are interconnected via a telecommunications network to one or more servers.

### Background of the Invention

There is an increasing requirement to improve the security with which corporate information is stored and used in digital form. Documents may contain any type of data, scanned images, program files, text or databases, which are stored as data files on a document repository server. Whilst it is known that information and document management systems can include some measure of access and privilege control, critical information may remain unencrypted and/or accessible to system administrators, database administrators and backup media managers.

It is desirable to provide a system with improved security management of documents stored on the system.

A system is described in WO-A-01/52473 which permits electronic documents to be securely transferred, stored, and shared. When an electronic document (60) is to be managed by the system, a document key pair (62), comprising a document public key (62a) and a document private key (62b) are generated. The document key pair (62) is used to encrypt the document, and a public key associated with a recipient is used to encrypt the document key pair (62). The document and all keys are generated, encrypted, and decrypted on a user's computer, so that the document management system has no access to decrypted versions of the document or the keys.

A virtual signing room is described in WO-A-00/62220 which facilitates the collaborative creation, editing, reviewing, and signing of electronic documents by parties situated in remote locations. Access to selected parts of documents is provided. The virtual signing room accepts and processes digital signatures coupled with secure authentication of parties to implement document signing. Audit trails and revision tracking are also enabled.

### Summary of the Invention

Various aspects and features of the present invention are defined in the appended claims.

Embodiments of the present invention can provide a document security management system for securely managing documents for users or for securely managing data for users. The document security management system comprises a document repository (which could be any industry standard or proprietary format repository) providing a facility for storing data files representing documents and a separate secure encryption key repository for securely storing public-private key pairs ("encryption key pairs") which are used to encrypt and decrypt documents in the document repository. Each of the encryption key pairs is associated with one or more of the documents currently stored or intended to be stored in the document repository. Each document stored in the document repository is encrypted with the public key of a specific encryption key pair ("encryption public key"). Hence there is for every document in the repository an associated encryption key pair (as distinct from a digital signature certificate key pair) stored in the secure encryption key repository. A plurality of client terminals are operable to retrieve the encrypted documents from the document repository for processing or viewing by users. Each user needs to obtain a digital signature certificate which contains a user-specific private key-public key pair, which may be for example in accordance with generally accepted National and International standards of PKI and National Legislation. The private key associated with a digital signature certificate key pair ("certificate private key) is accessible only to the owner of the certificate by commonly accepted PKI standards.

The key repository stores the private key of the encryption key pair ("encryption private key") encrypted with the public key of the digital signature certificate key pair ("certificate public key) associated with a user. The repository can contain for each document plural copies of the document's associated encryption private key, one separate copy per authorised user, with each user's encryption private key copy encrypted with that user's certificate public key. The repository also contains a single copy, in unencrypted form, of the encryption public key of each encryption key pair and a single copy of the certificate public key of each registered user of the system.

The client terminal has access to the user's certificate private key by virtue of having the digital signature certificate installed on the client terminal or through an attached device. The client terminal is operable to obtain a copy of the encryption private key from the key repository and to decrypt the encryption private key using the certificate private key to retrieve the encrypted document from the document repository and to decrypt the document using the encryption private key associated with the document. The obtained encrypted encryption private key is typically not deleted from the key repository.

Embodiments of the present invention can use industry-standard two key encryption algorithms such as RSA and address the following limitations of basic two-key encryption / decryption technology:
- A single encrypted copy of a document can be made available to multiple users in encrypted form with a reduced likelihood of compromising document security and without reliance upon transferring digital certificates;
- Controlled access to documents can be provided without relying a requirement for allocating and revoking personal digital certificates;
- Transfer of access privileges from one user to another can be provided without a requirement for decrypting the documents and without a need for users whose access is being removed being involved in the access privilege transfer;
- Document updates and document edits can be tracked and in particular View Access (i.e., those who have viewed the document even without saving, editing, or updating it in any way) and a legally certifiable record can be maintained, for example using PKI encryption of access to the document with a time stamp;
- Storing or transmitting copies of unencrypted keys with third parties and escrow agents is not typically required and the use of an escrow master key for any of the purposes stated above is not required.
- Since digital certificates have a limited validity, issue and management of multiple digital certificates per user can be handled independent of the security management system.

The document security management system according to an example embodiment of the present invention is provided with a document repository for storing data files, where each file has been encrypted with an encryption public key. The encryption public keys are stored in the key repository but in an unencrypted form. However the encryption private key, also stored in the key repository, is encrypted with the certificate public key associated with a user. As such, documents and encryption private keys are neither stored unencrypted nor communicated unencrypted. Decryption of the encrypted encryption private key only takes place in the client terminals by the provision of the certificate private key, which is allocated to the user and then the decrypted encryption private key is used to decrypt the encrypted document in the client terminal. That is to say, that the certificate private key is used to decrypt the encryption private key to recover the encryption private key. This is then used to decrypt the encrypted document, which has been encrypted with the encryption public key. To enhance security, the decrypted encryption private key is discarded soon after or immediately on decryption of the document and is not stored in the client machine. If necessary the encryption private key can be once more downloaded and decrypted by the user since it is only a copy of the encrypted encryption private key that has been retrieved on the client terminal.

Thus, in accordance with the present invention a two tier arrangement of private key/public key pairs is provided with an encryption key pair being associated with each of the documents and a second digital certificate key pair being associated with the users. A security management system for documents according to the present invention is therefore provided with an improvement in security and security management with respect to data files representing documents, which are managed by the system.

If a user leaves the organisation then his/her access to an encryption key pair can be withdrawn by simply deleting the user's encrypted copy of the encryption private key from the repository. In some embodiments the key repository is arranged to store each of the encryption private keys of the encryption keys pairs, encrypted with the certificate public key of one or more key managers. The key manager can therefore access the set of encryption private keys which had been allocated to a user (each encryption private key representing a unique document stored in the document repository), and remove one or more of the encryption private keys from the user's section of the key repository and if appropriate allocate it to another user. Accordingly, security is maintained even if a user leaves an organisation which operates the security management system for its documents.

The present invention is arranged to generate a hash value of the document after the document has been created or edited by a user. A hash value is a form of document digest, which represents in digital form the content within a data file. A client terminal on which a document has been created and/or edited may be arranged to run an application to generate the hash value. The client terminal may also generate a detached signature, which may be formed using the hash value. As such, when the user again edits the document the client can confirm that the document has not been amended in that the document corresponds to the hash value and that the signature corresponds to that generated when the document was previously signed by the user or the last user to edit the document. Accordingly, a further improvement in security is provided. In one example, the signature is a Public-Key Cryptographic Standards 7 (PKCS7) signature.

In some embodiments the document repository may include a log identifying when documents are retrieved for editing and/or viewing. As such management of documents and tracking of changes of secure information is thereby facilitated.

The invention is defined by independent claims 1,7, and 9.

Various further aspects and features of the present invention are defined in the appending claims.

### Brief Description of the Drawings

Embodiments of the present invention will now be described by way of example only with reference to the accompanying drawings where like parts are provided with corresponding reference numerals and in which:
Figure 1 is a schematic block diagram of a document management system in which a plurality of client terminals are connected to a document repository and to a key repository;
Figure 2 is a flow diagram illustrating a process through which an encryption key pair is generated and stored in the key repository server shown in Figure 1;
Figure 3 is a part block diagram part flow diagram illustrating a process through which a document is created on a client terminal;
Figure 4 is a part block diagram part flow diagram illustrating a process through which a document is accessed and edited on a client terminal;
Figure 5 is a flow diagram illustrating a process by which a new digital certificate private key/public key pair is issued and the public key is stored on a public key digital certificate repository shown in Figure 1;
Figure 6 is a flow diagram illustrating a process by which a user updates a copy of an encryption key pair after expiry of a user's digital certificate; and
Figure 7 is a flow diagram illustrating a process by which existing key pairs are issued to a new user.

### Description of Example Embodiments

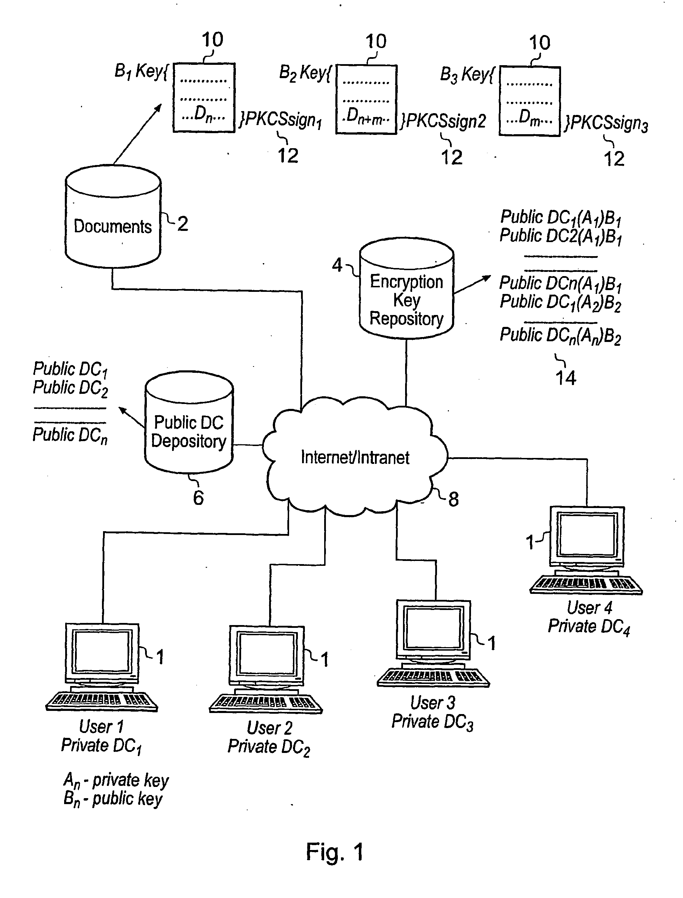

Example embodiments of the present invention will now be described with reference to Figure 1 which provides a schematic illustration of a security management system for documents which may for example be installed in an organisation where some level of security is appropriate to control, distribution and disclosure of information. In Figure 1 a plurality of client terminals 1 are connected to a document repository server 2, a key repository server 4 and a public digital certificate repository server 6 via a communications network 8. The document repository 2 is arranged to store information in the form of data files 10. However, each of the data files is encrypted with a public key of one of a plurality of encryption key pairs (A-key/B-key for encryption private key and encryption public key respectively). Thus each of the documents 10 has associated therewith one or more encryption key pairs.

In Figure 1 the encryption key pairs are designated A*ₙ*B*ₙ*. Thus for a first of the documents shown the document 10.1 is encrypted with the public key B*₁* of one of the encryption key pair A*₁*B*₁*.

The documents may also include a digital signature 12. As will be explained in the following paragraphs, the digital signature is added once a user has accessed the document or created the document.

As well as the encryption key pairs, the document security management system also includes a plurality of digital signature certificate key pairs which form digital certificates. These will be referred to in the following description as certificate key pairs (certificate private key or certificate public key as the case may be). Each of the plurality of certificate key pairs is associated with one of the users of the system. Thus, for the example shown in Figure 1 each of the client terminals has a user associated therewith (although a user may operate from any terminal carrying his digital certificate and certificate private key with him on a hardware device attachable to any terminal) and each user has associated with it a certificate key pair. A user may actually operate from any terminal carrying his/her certificate private key on an attachable mobile hardware device such as a smart card, USB token, mobile phone, PDA, etc. However it will be appreciated that there could be more users than client terminals and therefore the security management system is not limited to four certificate key pairs. The public keys of the certificate key pair are stored in public digital certificate repository server 6.

The encryption key repository server 4 stores the public key and the private key of the encryption key pairs. As mentioned above there is an association between the encryption key pairs and the documents present in the document management server 2 such that for each such document there is one and only one encryption key pair associated with it. However, a particular encryption key pair may be associated with more than one document For example, if a set of related documents all require a common group of users to access the set then one can assign just one encryption key pair to each document in the set. Note that other relationships are:
- Multiple users may have access to the same encryption key pair
- Multiple encryption key pairs may be accessible by the same user
- Each certificate key pair is assigned to one and only one user
- Each user may have multiple certificates (e.g., expired certificates are still required for signature verification and hence a user may collect many certificates over a period of time, each however uniquely assigned the that user alone)

More than one user may have access to any one document. Furthermore different users may be allowed access to the same document whilst maintaining security and uniquely identifying actions of one user with respect to those of another. To this end, each of the private keys of the encryption key pair associated with a document is encrypted with the public key of the certificate key pairs of users who may be allowed access to the document Thus each private key of an encryption key pair associated with a document is encrypted with the public key of the digital certificate. Any user having access to that document therefore has an encrypted version of the private key, this encryption private key being encrypted with the public key of that user's digital certificate. Thus, as shown within an area 14 within Figure 1, for each document and for each user which has access to that document there exists a public key for the encryption key pair. There also exists the private key of the encryption key pair encrypted with the public key of the certificate key pair.

According to the example of the present technique a key manager ( or multiple key managers in other embodiments) manages the distribution of the encryption key pairs to the various users and manages the repository of public keys of certificate key pairs. Each user obtains his/her digital certificate from a legally valid Certifying Authority and sends his/her public key of the digital certificate to the key manager. For example, governments have incorporated national legislation to govern and regulate certifying authorities, thus providing legal sanctity to digital certificates issued by them. The key manager uses a public digital certificate repository 6 to store the certificate public keys. In one example the private key of the certificate key pairs are provided on smart cards which can then be used in a smart card reader when the user is accessing one of the client terminals 1.

As explained above the encryption key pairs comprise two asymmetric pairs, which are represented in Figure 1 as a B-key which is the shorter public key and the A-key which is the longer private key. Each pair is also provided with a unique identifier (key pair ID or key ID). Data files representing documents stored in the document repository 2 are always encrypted with the B-key (encryption public key) of the key pair. The key pair ID of the B-key that is used for encryption is stored along with the encrypted data file. Therefore it is always possible to know given an instance of the encrypted data file, which encryption key pair is to be used for decrypting the information and/or encrypting the information provided in the data file. Users are granted specific access to review and/or update the data files. The data files are updated and then re-encrypted in the client terminal before being communicated back to the document repository 2.

The document repository 2 may contain structured data files or digital files or both. The key repository 4 stores the encryption key pairs. The B keys are stored in unencrypted form and all A-keys are stored in encrypted form. In one example, the encryption key pairs are generated by the user who has created the document Alternatively, encryption key pairs may be created by a key manager within the organisation. There can be multiple key managers within a given organisation, who are responsible for different sets of encryption key pairs. Each authorised user has access to all public keys (B keys) of the encryption key pairs, because these are unencrypted. Each user may have access to multiple private keys of the encryption key pairs (A-keys) which are stored in a user specific section 14 encrypted with the public key of the user's digital certificate. A process through which the encryption key pairs are generated is described in the following section.

### Encryption Key Pair Generation

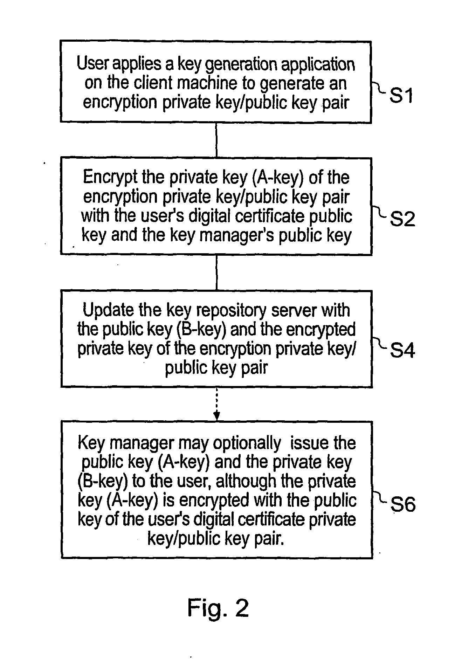

Figure 2 provides a flow diagram representing a process in which an encryption pair is generated by a user in association with a document. Figure 2 is summarised as follows:
S1: The user applies a key generation application which is operating, for example, on the client terminal on which the user is working in order to generate an encryption key pair. A private encryption key is never available on the server in unencrypted form. It is available on client terminal in unencrypted form only while the session with the server is live during which period only the authenticated user has access to that client terminal.
S2: The private key (A-key) of the encryption key pair is then encrypted (at least) twice - one copy is encrypted with the user's digital certificate public key and a second copy with the key manager's public key. The private key (A-key) of the encryption key pair is encrypted with the key manager's public key so that the key manager can decrypt the private key (A key) should this be necessary if the user were to leave the organisation or has to be denied access to that document for some reason.
S4: The user then updates the key repository server with a public key (B-key) and the encrypted private key (A-key) of the encryption key pair.
S6: Optionally the key manager may issue the public key (B-key) and the private key (A-key) to the user, if the key manager generated this encryption key pair. The private key (A key) is encrypted with the public key of the user's certificate key pair. The key manager may then authorise other users to access the document by encrypting copies of the private key (A key) of the encryption key pair with the public key of the other users' certificate key pair.

The key pair generation may take place when a document is generated or may be generated before a document is first created, but in all cases before the document is updated / sent to the server so as not to compromise security.

### Adding Secure Information to the Document Repository

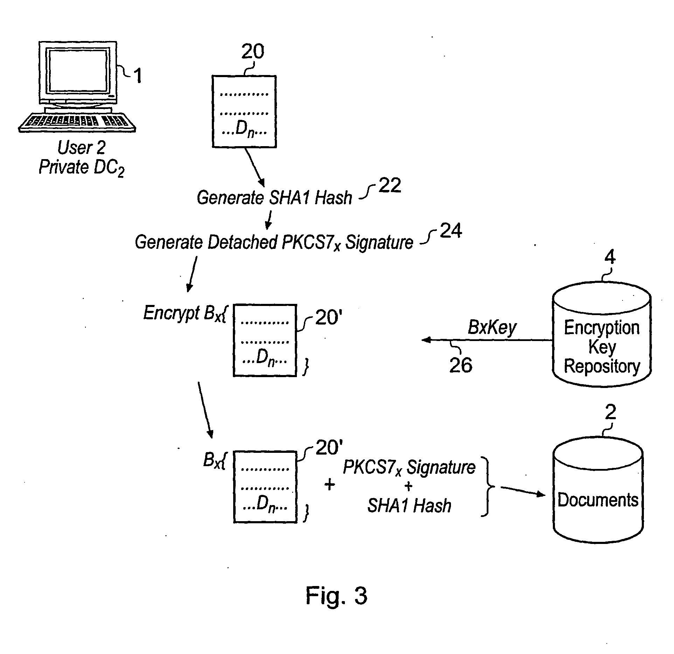

Figure 3 provides a part-schematic, part-flow diagram illustrating a process through which a user creates a document and then stores the document in encrypted form in the document repository using the encryption key pair generated in Figure 2. In Figure 3, one of the client terminals 1 is used by a user, for example user2, to create a data file 20 representing a digital document. The data file is created by an application program running on the client terminal 1 in a conventional manner. An application on the client terminal then generates a digital hash using, for example, the Secure Hash Algorithm SHA-1 of the data file at a first step 22. The application also then generates a detached digital signature 24, which is generated using the digital certificate of the user. Thus, the digital signature is generated by the user using the user's private key of the digital certificate from the document. The digital signature uses the private key. It serves as a signature because it is based on the private key to which only the owner of the certificate has access. In one example the digital signature is a Public-Key Cryptography Standards # 7 (PKCS7). The PKS7 signature is then attached to the digital document 20. More information on the PKCS7 can be found from the RSA Laboratories (www.rsasecurity.com).

The application on the client terminal 1 then retrieves the public key of one of the encryption key pairs which has either been pre-generated as indicated above or is generated at the time of creation of the document 20. The key repository 4 provides the public key (B*ₓ* key) 26 to the client terminal 1 which is used to encrypt the document data file 20 to form an encrypted data file 20', the document having been encrypted with the public key of the encryption key pair.

The encrypted data file 20' is then stored in the document repository server 2 by communicating the encrypted data file from the client terminal 1 to the document repository server 2 via the communications network 8. The document is communicated with the digital signature (PKCS7). Furthermore, the hash value is included with the communicated encrypted data file 20'. Thus the document repository server stores the data file 20 in encrypted form (encrypted with the public key of the encryption key pair) with the hash value included in the digital signature.

### Secure Access Log

According to the present technique whenever a user accesses a document then he/she is required to generate a digital signature which is communicated to the document repository server and stored in association with the document concerned. As indicated above, in one example the digital signature is generated in accordance with the PKCS7 international standard for generating digital signatures. In one example, the digital signature is a detached digital signature. The digital signature will always include the public key (B-key) associated with the document, that is the public key of the encryption pair allocated to that document required for recording an attempt to access the corresponding private key, and will always include the hash value generated from the document which is encrypted with the private key of the certificate key pair of the user accessing the document. As mentioned above the hash value forms a digest of the content of the data file representing the document. Since the encryption public key is available on the key repository server 2 then any authorised user can download the appropriate public key and verify the signature by decrypting the encrypted hash value with the public key of the certificate pair in order to validate the viewed signature.

### Viewing Secure Information from Repository

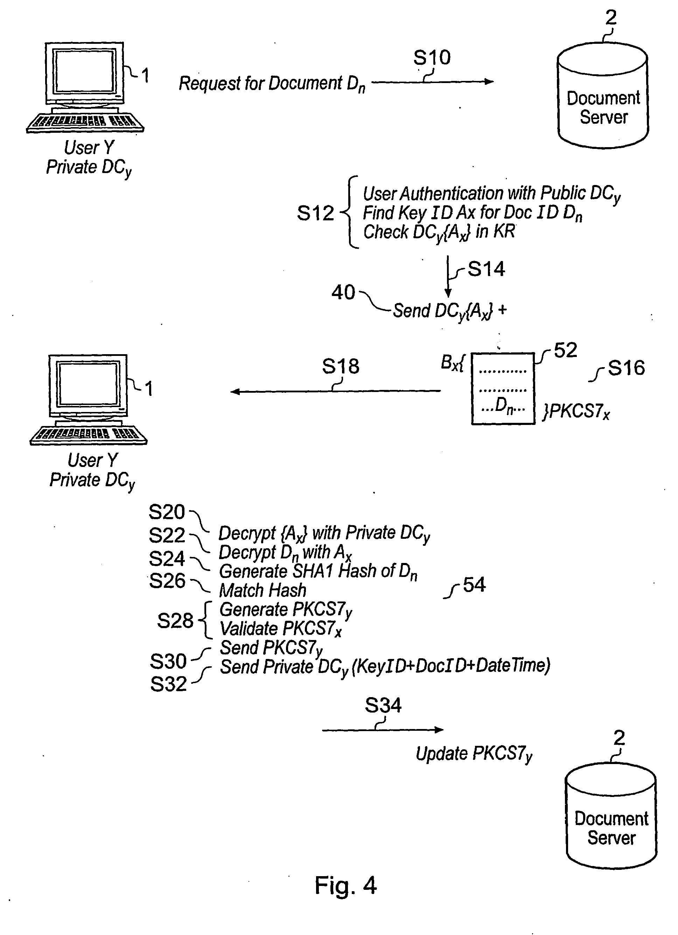

Figure 4 provides a part-schematic block diagram of the system elements and a part-flow diagram illustrating process steps involved in viewing and editing documents stored on the document server 2. In Figure 4 a user, for example user Y, accesses one of the client terminals 1 in order to review and/or edit a document stored on the document server 2. The process steps performed in order to view and edit a document are summarised as follows:
S10: The user Y first activates an application program on the client terminal, which sends a request for information to the document server 2 requesting access to a particular document. Prior to the request the user authenticates itself as an authorised user by decrypting with its certificate private key a random challenge phrase sent by the server, the server having sent the challenge phrase encrypted with the public key of the user's digital certificate.
S 12: For the requested document, the document repository server 2 finds the key pair ID of the encryption key pair corresponding to the document identifier D*ₙ*. The document server 2 then checks the record of user Y with respect to the encrypted private key of the encryption key pair identified by the key ID associated with the document identifier D*ₙ*. If user Y's record is not found for the specific Key Pair ID, request is rejected.
S 14: If user Y's record is found, the document server 2 obtains the private encryption key corresponding to the public key with which the document concerned has been encrypted from the key repository and then sends it to the user. The private key (A*ₓ*) is sent to the user in a form in which it has been encrypted with the public key of the digital certificate of the user Y 40.
S16: The document server 2 also sends the identified document 52 to the user which, as previously mentioned, is encrypted with the public key of the private key/public key pair.
S18: Together with the encrypted data representing the document 52 a digital signature is also sent with the data file representing the document 52 to the client terminal 1, which is communicated to the user terminal 1 in response to the request for the document D*ₙ*.

Once the user terminal 1 receives the encrypted document 52 the application on the client terminal 1 performs the following functions as indicated within an area 54 illustrating the functional steps performed by the application program:
S20: The application on the client terminal 1 decrypts the private key (A-key) of the first private key/public key pair received from the document repository server 2 using the private key of user Y's digital certificate.
S22: The client terminal 1 then decrypts the document 52 using the decrypted private key (A-key) of the first document private key/public key pair associated with the document 52.
S24: The application program running on the client terminal 1, then generates an SHA1 hash of the decrypted document 52.
S26: The generated hash value is then compared with the hash value obtained by decrypting the hash in the PKCS7 detached signature of the previous user X with public certificate key of user X which was received with the decrypted document 52 from the document server 2. This establishes that X's signature is valid and the document has not been viewed/accessed/changed by anyone between the time X accessed it and now.
S28: The application program then generates the PKCS7 detached digital certificate for user Y. The signature is generated by encrypting the hash value with the public key of the user Y's digital certificate.
S30: The application on the client terminal then sends the PKS7Y signature generated by the user Y from the client terminal 1 for storage on the document server 2.
S32: The client terminal sends the key ID of the encryption key pair, which was used to encrypt the document. The document ID and the date and time at which access took place are also sent for storage in the document server 2. To increase security, by reducing a likelihood of the key ID, the document ID or the date and time being altered by an attack which is aimed at disrupting the document management system the key ID, the document ID and the date and time are encrypted with the private key of the user Y's digital certificate.
S34: As illustrated by an arrow, the key ID, the document ID and the date and time are sent to the document server 2 for storage. The key ID and the document ID are digitally signed by the user's digital certificate to create a "view signature" with the date and time. This provides a unique identifier indicating when the document was reviewed, edited and accessed. The hash value is also used by the viewing user to verify the authenticity of the signature, which the user is creating. The "view signature" is updated on the document server 2 along with a view log. Once the document has been edited it is then re-encrypted and stored on the document repository with a new hash value and a new view signature as represented by the flow diagram in Figure 3.

If a different user wishes to access the same document then a second version is stored. Information stored by a previous user is not updated, except for adding the "view signature" of the current user.

When a user leaves an organisation or is no longer to be allowed access to certain information the corresponding private keys (A keys) associated with the encryption key pairs are removed from this user's section of the key repository and, if appropriate and necessary, allocated to a different user. When the private key of the encryption key pairs are allocated to a different user, that user views the information as set out above and digitally signs the information after verification. A second detached PKS7 signature is stored on the server and associated with the document for which that user is now responsible.

The document management system according to the present technique can also be extended to deny access to any single user or even multiple users when access to certain secure information is to be granted only if some or all of a set of authorised users are physically present logged in (frequently required for security reasons or as company policy). The private (A-key) of the first document private key/public key pair is not issued to a single user as a whole but is split into two, three or a plurality of parts as required and individual parts are assigned to specific users. In this example, all users who hold parts of the key have to log in together (in any order) from the same client terminal and apply their digital certificates (or smart card and/or through typing a password) before the information can be decrypted.

### Addition of a New Digital Certificate Public Key on Public DC Repository

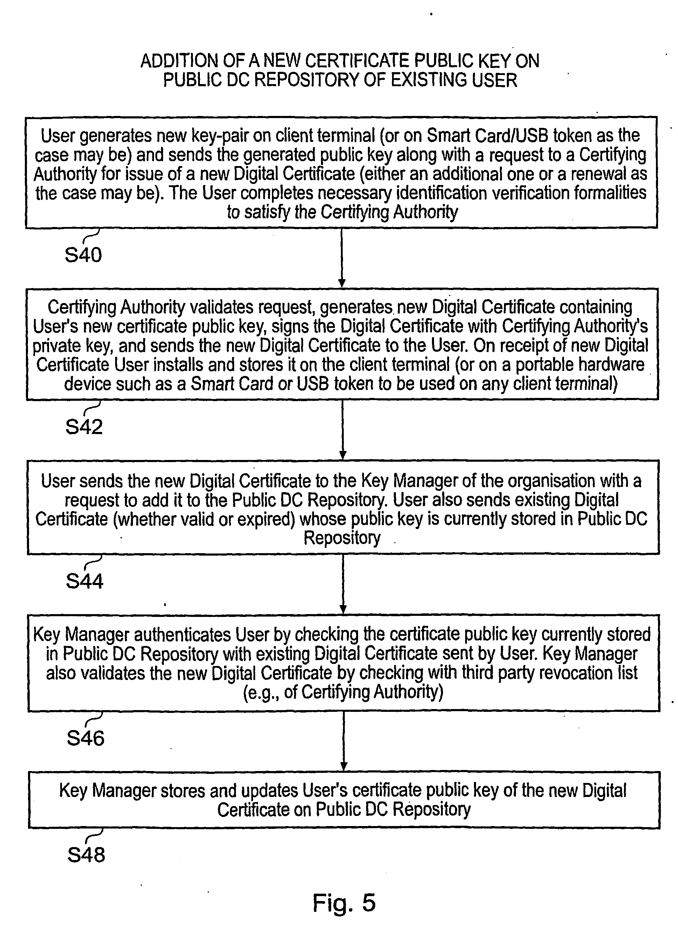

To acquire a new digital certificate private key / public key pair for accessing encrypted documents in accordance with the present technique, a user would in one example apply to a certifying authority for a new digital certificate public key / private key pair. After being provided with the new digital certificate public key/private key pair the user then up-dates its digital certificate by sending the public key to the key manager. A flow diagram illustrating an example of this process is shown in Figure 5. The process steps of Figure 5 will now be summarised as follows:
S40: A user generates a new private key / public key pair on a client terminal. The new private key / public key pair could be generated on a smart card or on a USB token or may be generated on a personal computer (for example a note book PC) which forms the client terminal. The user then sends the generated public key of the digital certificate pair along with a request to a certifying authority for issuing a new digital certificate which could be either an additional digital certificate private key / public key or a renewal of an existing digital certificate. The user completes the necessary identification verification formalities to satisfy the certifying authority.
S42: The certifying authority then validates the request from the user and generates a new digital certificate containing the user's new certificate public key, signs the digital certificate with the certifying authority's private key and sends the new digital certificate to the user. On receipt of the new digital certificate the user checks the certifying authority's certificate and installs the digital certificate on the client terminal.
S44: The user then sends the public key of the new digital certificate to the key manager of the organisation with a request to add the key to the public digital certificate repository. The user also sends the existing digital certificate public key whether valid or expired, the public key being currently stored in the public digital certificate repository.
S46: The key manager then authenticates the user by checking the certificate public key currently stored in the public digital certificate repository with the existing digital certificate public key sent by the user. The key manager then also validates the new digital certificate by checking this digital certificate with a third party revocation list for example provided by the certifying authority.
S48: The key manager stores and updates the user's certificate public key of the new digital certificate on the public digital certificate repository.

### Updating a User's Copy of an Encryption Key Pair after expiry of a User's Digital Certificate

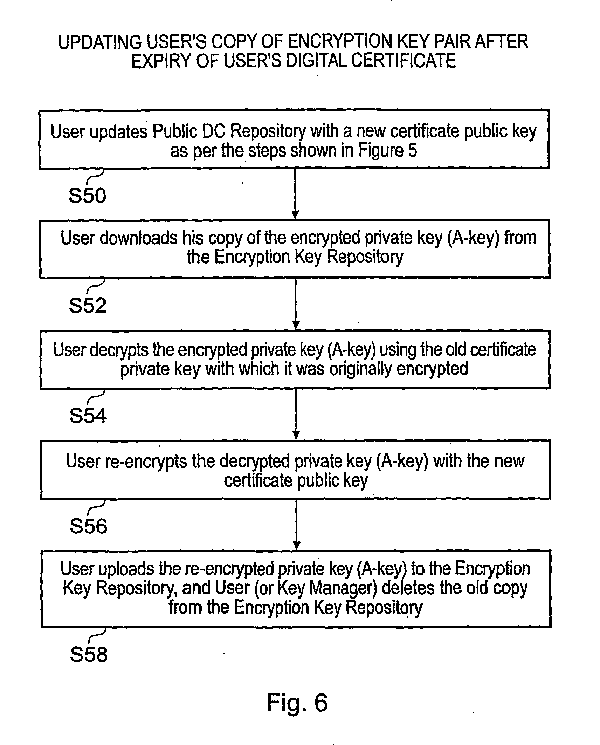

The process through which a user updates a copy of an encryption key pair using the new digital certificate acquired in the process illustrated above is represented in Figure 6. The flow diagram shown in Figure 6 is summarised as follows:
S50: The user updates the public digital certificate repository with a new certificate public key as for example illustrated by the steps of the process illustrated in Figure 5.
S52: The user first downloads the copy of the encryption private key from the encryption key repository, which is encrypted with the user's old public key.
S54: The user then decrypts the encrypted private key (A key) using his old digital certificate private key to recover the encryption private key (A key).
S56: The user then re-encrypts the decrypted encryption private key (A key) with the new digital certificate public key.
S58: The user then uploads the re-encrypted encryption private key (A key) and installs this on the encryption key repository. The user or the key manager then deletes the old copy of the encryption private key (A key) from the encryption key repository.

### Providing Access to a Document to a New User

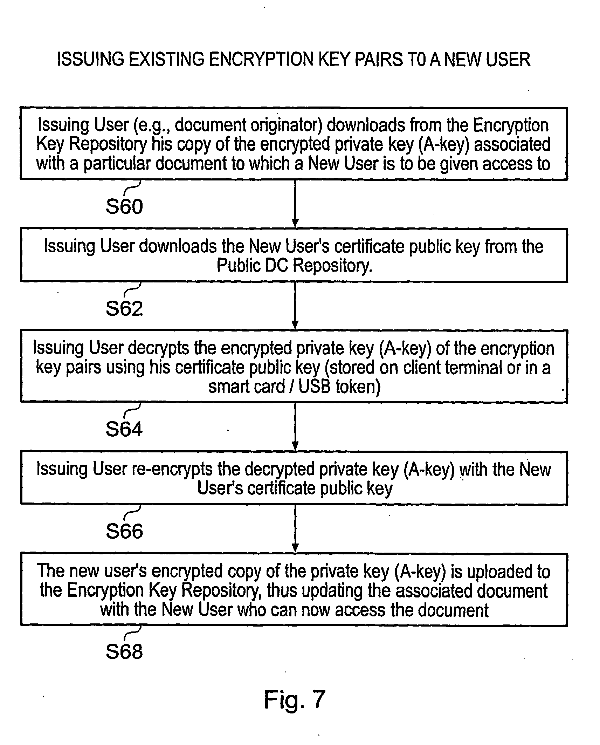

As will be appreciated from the example applications of the present technique described above, document security is provided by encrypting that document with the public key of the private key/public key pair of the encryption keys and storing that document on the document repository. The user can then access that document by downloading the encrypted private key of the encryption key pair, decrypting that private key and then downloading the encrypted document to decrypt that document with the decrypted private key. However, the present technique also provides an opportunity for a user to allow access to that document by another user in a secure manner. To this end, the user downloads and decrypts the private key corresponding to the encryption public key with which the document has been encrypted and encrypts a copy of that private key with the public key of a new user's digital certificate. Figure 7 provides a flow diagram illustrating an example of a process in which a new user is provided with access to the private key for accessing an encrypted document, the document having been encrypted with the corresponding public key of the encryption private key public key pair. Figure 7 is summarised as follows:
S60: A user who is issuing access to a document, for example the document originator, downloads from the key repository a copy of the encrypted private key (A key) which is associated with a particular document to which a new user is to be given access.
S62: The issuing user also downloads the new user's digital certificate public key from the public digital certificate repository.
S64: The issuing user then decrypts the encrypted private key (A key) of the encryption key pair using the digital certificate private key for that user which may be stored on the client terminal or in a smart card or a USB token.
S66: The issuing user then re-encrypts the decrypted private key (A key) with the new user's digital certificate public key.
S68: The new user's encrypted copy of the encryption private key (A key) is then uploaded to the key repository. The new user therefore can access the document corresponding to the encryption private key public/key pair because the new user can download the corresponding encrypted private key (A key) with which the user's corresponding public key has been used to encrypt the document and to decrypt the private key using the new user's digital certificate private key so that the document can be decrypted with the user's encryption private key.
Various modifications may be made to the embodiments described above without departing from the scope of the present invention. For example, it will be appreciated that any form of hash algorithm can be used to generate the hash value, and SHA1 algorithm is but one example of an algorithm, which could be used. Also PKCS7 is provided as one example of a signature and any other signature algorithm can be used to generate an appropriate authorisation and validation of a user's activity. The telecommunications network could be an intranet and/or an internet access so that one advantage of the present invention could be secure access to documents via the internet Another advantage of the present invention could be to secure access to documents via a corporate LAN/WAN.

### Application to Electronic Procurement Systems

Embodiments of the present invention may also be incorporated in electronic data or document exchange systems such as electronic procurement systems or electronic sealed bid systems, such as that disclosed in W02004/091135. For example, electronic tendering is a form of an electronic sealed bidding system used by organisations such as Government agencies and the public sector for procurement of goods, services, and works. In such applications the procuring agency invites tenders, and interested vendors submit sealed bids in response to tenders. The bids may be securely signed and sealed using encryption techniques such as for example Public Key Infrastructure methods or digital certificates, and may be required to be opened by specified users of the procuring agency only after a particular date and time. Thus in accordance with the present technique, each party to a secure bid is arranged to poses a digital certificate key pair. This is used to access a private key of an encryption key pair stored in a key repository, encrypted with the public key of the digital certificate key pair. Documents created as part of the secure bid process are stored on a document repository, encrypted with the private key of the encryption key pair. Therefore the document management system can provide:
(i) Secure access and control to procuring agencies so that only designated users have access to tender and bid documents.
(ii) The transfer/replacement of access and control rights of a designated user of a procuring agency mid-way through a tendering process can be achieved without compromising or at least reducing a risk to system or individual security, which might otherwise be caused by sharing of passwords or digital certificates. This may be achieved by either decrypting the transferor's encrypted copy of the private key (A key) of the encryption key pairs associated with the tender/bid document using the transferor's certificate private key and re-encrypting it with the transferee's certificate public key, or alternatively if a Key Manager has been appointed in the organisation the Key Manager can download an encrypted private key associated with the tender/bid document, decrypt it with the Key Manager's certificate private key, and re-encrypt it with the certificate public key of the transferee (i.e., the new designated user). The Key Manager can also delete the encrypted private key associated with the tender/bid document of the transferor (i.e., the old designated user) to deny any further access.
(iii) Opening/decryption of tender documents and sealed bids is only executed when all designated users are present/logged-in, which is frequently mandatory in public sector and government procurement. This can be achieved by splitting the private (A key) associated with the encryption key pairs as described above.

## Claims

1. A document security management system for securely managing documents or data files for users, the document management system comprising
a document repository (2) providing a facility for storing data files representing the documents,
a key repository (4) for storing a public key of one or more encryption key pairs, each of the encryption key pairs being associated with one or more of the documents stored in the document repository, at least one of the encryption key pairs being associated with a set of two or more of the documents stored in the document repository (2), and each document stored in the document repository (2) is encrypted with the public key of the encryption key pair associated with the document, and
a plurality of client terminals (1) operable to retrieve the documents from the document repository (2) for processing by a user, wherein each user is provided with a digital certificate comprising a certificate key pair, and the key repository (4) includes the private key of the encryption key pair encrypted with the public key of the certificate key pair associated with the user, the client terminals (1) being operable with the private key of the certificate key pair
to decrypt the private key of encryption key pair using the private key of the certificate key pair,
to retrieve the encrypted document from the document repository (2), and
to decrypt the document using the decrypted private key of the encryption key pair so access the document;
wherein, the document security management system is **characterized in that** the client terminals (1) are operable
to generate a hash value of the document after the document has been created or edited by a user,
to encrypt the hash value with the private key of the encryption key pair, and
to store the encrypted hash value with the encrypted document on the document repository (2), and the client terminal is operable when retrieving the document from the document repository (2)
to decrypt the hash value which has been stored in association with the document,
to recalculate the hash value from the decrypted document retrieved from the document repository (2), and
to verify that the document corresponds with a version of the document in a form when the hash value which has been stored in association with document was produced, by comparing the recalculated hash value with the hash value which was stored on the document repository in association with the document.

2. A document security management system as claimed in Claim 1, wherein the client terminal (1) is operable
to generate a digital signature using the user's private key of the certificate key pair, by
calculating a hash value of the document, and
encrypting the hash value calculated from the document with the private key, and
to store the digital signature in association with the encrypted document in the document repository (2), and the client terminal (1) is operable when retrieving the document from the document repository (2)
to retrieve the digital signature associated with the document from the document repository,
to re-calculate the hash value from the decrypted document,
to extract the hash value from the digital signature by decrypting the encrypted hash value in the signature
to compare the extracted hash with the re-generated hash, and if the re-generated hash is the same as the extracted hash validating the retrieved digital signature as being authentic.

3. A document security management system as claimed in Claim 1 or 2, wherein the digital signature is a detached digital signature generated in accordance with the Public Key Certificate Standard 7.

4. A document security management system as claimed in any preceding Claim, wherein the client terminal (1) is operable to generate a temporal reference indicating a time and/or a date when the document was created and/or edited,
to encrypt the temporal reference with the public key encryption key pair, and to communicate the encrypted temporal reference to the document repository (2), the document repository (2) being operable to store the temporal reference with the document in the document repository (2).

5. A document management security system as claimed in any preceding Claim, wherein the key repository (4) is operable
to store the public key of the one or more encryption key pairs in the key repository (4),
to encrypt the private key of the one or more encryption key pairs with the public key of the certificate key pair associated with a user, and
to store the encrypted private key of the one or more encryption key pairs on the key repository (4).

6. A document security management system as claimed in any preceding Claim, wherein the key repository (4) is arranged to store each private key of the one or more encryption key pairs encrypted with a public key of a key manager's certificate key pair.

7. A method of securely managing documents for users, the method comprising
storing data files representing documents on a document repository (2), storing a public key of one or more encryption key pairs on a key repository (4), each of the encryption key pairs being associated with one or more of the documents stored in the document repository (2), at least one of the encryption key pairs being associated with a set of two or more of the documents stored in the document repository (2), and each document stored in the document repository (2) being encrypted with the public key of the encryption key pair associated with the document,
storing and/or retrieving the documents from the document repository (2) for processing by a user, wherein the key repository (4) includes the private key of encryption key pair encrypted with the public key of a digital certificate key pair associated with the user, the method including
decrypting the private key of the encryption key pair using the private key of the certificate key pair,
retrieving the encrypted document from the document repository (2), and
decrypting the document using the decrypted private key of the first document private key/public key pair; the method being **characterized in that** is comprises
generating a hash value of the document after the document has been created or edited by a user,
encrypting the hash value with the private key of the first document private key/public key pair,
storing the encrypted hash value with the encrypted document on the document repository (2),
decrypting the hash value which has been stored in association with the document,
re-calculating the hash value from the decrypted document retrieved from the document repository (2), and
verifying that the document corresponds with a version of the document in a form when the hash value which has been stored in association with document was produced, by comparing the recalculated hash value with the hash value which was stored on the document repository in association with the document.

8. A method as claimed in Claim 7, the method comprising
generating a digital signature using the user's private key of the certificate key pair, by
calculating a hash value of the document, and
encrypting the hash value calculated from the document with the public key,
storing the digital signature in association with the encrypted document in the document repository (2),
retrieving the digital signature associated with the document from the document repository (2),
re-calculating the hash value from the decrypted document,
re-generating the digital signature by encrypting the re-calculated hash value with the user's public key of the second document private key/public key pair, and
comparing the retrieved digital signature with the re-generated digital signature, and if the re-generated digital signature is substantially the same as the re-retrieved digital signature validating the retrieved digital signature as being authentic.

9. A client terminal (1) operable in combination with a key repository (4) and a document repository (2) of a document security management system, the client terminal (1) being operable to store and to retrieve documents to and from the document repository (2) for processing by a user, wherein each set of one or more documents is encrypted using the private key of an associated encryption key pair, and at least one of the encryption key pairs is associated with a set of two or more of the documents, and wherein each user possesses a digital certificate comprising a certificate key pair, and the key repository (4) includes the private key of the encryption key pair encrypted with the public key of the certificate key pair associated with the user, the client terminal (1) being provided by the user with the private key of the certificate key pair, the client terminal (1) being operable
to decrypt the private key of the encryption key pair using the private key of the certificate key pair,
to retrieve the encrypted document from the document repository (2),
to decrypt the document using the decrypted private key of the encryption key pair; the client terminal being **characterized in that** in is operable
to generate a hash value of the document after the document has been created or edited by a user,
to encrypt the hash value with the private key of the encryption key pair, and
to store the encrypted hash value with the encrypted document on the document repository (2), and the client terminal is operable when retrieving the document from the document repository (2)
to decrypt the hash value which has been stored in association with the document,
to recalculate the hash value from the decrypted document retrieved from the document repository (2), and
to verify that the document corresponds with a version of the document in a form when the hash value which has been stored in association with document was produced, by comparing the recalculated hash value with the hash value which was stored on the document repository in association with the document.

10. A client terminal (1) as claimed in Claim 9, wherein the client terminal (1) is operable
to create a data file representing a document,
to encrypt the data file with the public key of the one or more encryption key pairs, and
to store the encrypted data file on the document repository (2).

## Patentansprüche

1. Dokumentensicherheitsverwaltungssystem zum sicheren Verwalten von Dokumenten oder Dateien für Benutzer, wobei das Dokumentenverwaltungssystem aufweist:
einen Dokumentenspeicher (2), der eine Einrichtung zum Speichern von Dateien, die die Dokumente darstellen, bereitstellt,
einen Schlüsselspeicher (4) zum Speichern eines öffentlichen Schlüssels eines oder mehrerer Verschlüsselungsschlüsselpaare, wobei jedes der Verschlüsselungsschlüsselpaare einem oder mehreren der in dem Dokumentenspeicher gespeicherten Dokumente zugeordnet ist, wobei mindestens eines der Verschlüsselungsschlüsselpaare einem Satz von zwei oder mehr der in dem Dokumentenspeicher (2) gespeicherten Dokumenten zugeordnet ist und wobei jedes in dem Dokumentenspeicher (2) gespeicherte Dokument mit dem öffentlichen Schlüssel des Verschlüsselungsschlüsselpaares, das dem Dokument zugeordnet ist, verschlüsselt ist, und
einer Mehrzahl von Client-Terminals (1), die so betreibbar sind, dass sie die Dokumente aus dem Dokumentenspeicher (2) zum Verarbeiten durch einen Benutzer abrufen, wobei jeder Benutzer mit einem digitalen Zertifikat versehen ist, das ein Zertifikatschlüsselpaar aufweist und der Schlüsselspeicher (4) den privaten Schlüssel des Verschlüsselungsschlüsselpaars, das mit dem öffentlichen Schlüssel des Zertifikatschlüsselpaares, das dem Benutzer zugeordnet ist, verschlüsselt ist, aufweist, wobei die Client-Terminals (1) mit dem privaten Schlüssel des Zertifikatschlüsselpaars so betreibbar sind,
dass sie den privaten Schlüssel des Verschlüsselschlüsselpaars entschlüsseln, wobei der private Schlüssel des Zertifikatschlüsselpaars verwendet wird,
dass sie das verschlüsselte Dokument aus dem Dokumentspeicher (2) abrufen und
dass sie das Dokument entschlüsseln, wobei der entschlüsselte private Schlüssel des Verschlüsselungsschlüsselpaars verwendet wird, um auf das Dokument zuzugreifen,
wobei das Dokumentensicherheitsverwaltungssystem **dadurch gekennzeichnet ist, dass** die Client-Terminals (1) so betreibbar sind,
dass sie einen Hash-Wert des Dokuments erzeugen, nachdem das Dokument von einem Benutzer erzeugt oder bearbeitet wurde,
dass sie den Hash-Wert mit dem privaten Schlüssel des Verschlüsselungsschlüsselpaars verschlüsseln und
dass sie den verschlüsselten Hash-Wert mit dem verschlüsselten Dokument in dem Dokumentenspeicher (2) speichern und das Client-Terminal, wenn es das Dokument aus dem Dokumentenspeicher (2) abruft, so betreibbar ist,
dass es den Hash-Wert, der in Verbindung mit dem Dokument gespeichert wurde, entschlüsselt,
dass es den Hash-Wert aus dem entschlüsselten Dokument, das aus dem Dokumentenspeicher (2) abgerufen wurde, neu berechnet und
dass es verifiziert, dass das Dokument einer Version des Dokuments in einer Form entspricht als der Hash-Wert, der in Verbindung mit dem Dokument gespeichert wurde, erzeugt wurde, durch Vergleichen des neuberechneten Hash-Werts mit dem Hash-Wert, der in dem Dokumentenspeicher in Verbindung mit dem Dokument gespeichert war.

2. Dokumentensicherheitsverwaltungssystem nach Anspruch 1,
wobei das Client-Terminal (1) so betreibbar ist,
dass es eine digitale Signatur erzeugt, wobei der private Schlüssel des Zertifikatschlüsselpaars des Benutzers verwendet wird, durch
Berechnen eines Hash-Werts des Dokuments und
Verschlüsseln des aus dem Dokument berechneten Hash-Werts mit dem privaten Schlüssel und
Speichern der digitalen Signatur in Verbindung mit dem verschlüsselten Dokument in dem Dokumentenspeicher (2) und wobei das Client-Terminal (1), wenn es das Dokument aus dem Dokumentenspeicher (2) abruft, so betreibbar ist,
dass es die dem Dokument zugeordnete digitale Signatur aus dem Dokumentenspeicher abruft,
dass es den Hash-Wert aus dem entschlüsselten Dokument neu berechnet,
dass es den Hash-Wert aus der digitalen Signatur extrahiert durch Entschlüsseln des verschlüsselten Hash-Werts in der Signatur,
dass es den extrahierten Hash-Wert mit dem neu erzeugen Hash-Wert vergleicht und wenn der neu erzeugte Hash-Wert der gleiche ist wie der extrahierte Hash-Wert, die abgerufene digitale Signatur als authentisch validiert.

3. Dokumentensicherheitsverwaltungssystem nach Anspruch 1 oder 2, wobei die digitale Signatur eine vereinzelte digitale Signatur ist, die gemäß dem Public-Key-Zertifikat-Standard 7 erzeugt wurde.

4. Dokumentensicherheitsverwaltungssystem nach einem der vorhergehenden Ansprüche, wobei das Client-Terminal (1) so betreibbar ist, dass es eine Zeitreferenz erzeugt, die eine Zeit und/oder ein Datum bezeichnet, zu der das Dokument erzeugt und/oder bearbeitet wurde,
dass es die Zeitreferenz mit dem öffentlichen Schlüssel des Verschlüsselungsschlüsselpaars verschlüsselt und
dass es die verschlüsselte Zeitreferenz dem Dokumentenspeicher (2) übermittelt, wobei der Dokumentenspeicher (2) so betreibbar ist, dass er die Zeitreferenz mit dem Dokument in dem Dokumentenspeicher (2) speichert.

5. Dokumentenverwaltungssicherheitssystem nach einem der vorhergehenden Ansprüche, wobei der Schlüsselspeicher (4) so betreibbar ist,
dass er den öffentlichen Schlüssel eines oder mehrerer Verschlüsselungsschlüsselpaare in dem Schlüsselspeicher (4) speichert,
dass er den privaten Schlüssel des einen oder der mehreren Verschlüsselungsschlüsselpaare mit dem öffentlichen Schlüssel des Zertifikatschlüsselpaars, das einem Benutzer zugeordnet ist, verschlüsselt und
dass er den verschlüsselten privaten Schlüssel des einen oder der mehreren Verschlüsselungsschlüsselpaare in dem Schlüsselspeicher (4) speichert.

6. Dokumentensicherheitsverwaltungssystem nach einem der vorhergehenden Ansprüche, wobei der Schlüsselspeicher (4) so eingerichtet ist, dass er jeden privaten Schlüssel des einen oder der mehreren Verschlüsselungsschlüsselpaare, die mit einem öffentlichen Schlüssel eines Zertifikatschlüsselpaars eines Schlüsselverwalters verschlüsselt sind, speichert.

7. Verfahren zum sicheren Verwalten von Dokumenten für Benutzer, wobei das Verfahren umfasst:
Speichern von Dateien, die Dokumente darstellen, in einem Dokumentenspeicher (2),
Speichern eines öffentlichen Schlüssels eines oder mehrerer Verschlüsselungsschlüsselpaare in einem Schlüsselspeicher (4), wobei jedes der Verschlüsselungsschlüsselpaare einem oder mehreren in dem Dokumentenspeicher (2) gespeicherten Dokumenten zugeordnet ist, wobei mindestens eines der Verschlüsselungsschlüsselpaare einem Satz von zwei oder mehr der in dem Dokumentenspeicher (2) gespeicherten Dokumente zugeordnet ist und jedes in dem Dokumentenspeicher (2) gespeicherte Dokument mit dem öffentlichen Schlüssel des Verschlüsselungsschlüsselpaares, das dem Dokument zugeordnet ist, verschlüsselt ist,
Speichern und/oder Abrufen der Dokumente aus dem Dokumentenspeicher (2) zum Verarbeiten durch einen Benutzer, wobei der Schlüsselspeicher (4) den privaten Schlüssel des mit dem öffentlichen Schlüssel eines digitalen Zertifikatschlüsselpaars, das dem Benutzer zugeordnet ist, verschlüsselten Verschlüsselungsschlüsselpaars enthält, wobei das Verfahren umfasst
Entschlüsseln des privaten Schlüssels des Verschlüsselungsschlüsselpaars, wobei der private Schlüssel des Zertifikatschlüsselpaars verwendet wird,
Abrufen des verschlüsselten Dokuments aus dem Dokumentenspeicher (2) und
Entschlüsseln des Dokuments, wobei der entschlüsselte private Schlüssel des ersten privaten/öffentlichen Dokumentenschlüsselpaars verwendet wird, wobei das Verfahren **dadurch gekennzeichnet ist, dass** es aufweist
Erzeugen eines Hash-Werts des Dokuments, nachdem das Dokument von einem Benutzer erzeugt oder bearbeitet wurde,
Verschlüsseln des Hash-Werts mit dem ersten privaten/öffentlichen Dokumentenschlüsselpaar,
Speichern des verschlüsselten Hash-Werts mit dem verschlüsselten Dokument in dem Dokumentenspeicher (2),
Entschlüsseln des Hash-Werts, der in Verbindung mit dem Dokument gespeichert wurde,
Neuberechnen des Hash-Werts aus dem aus dem Dokumentenspeicher (2) abgerufenen verschlüsselten Dokuments und
Verifizieren, dass das Dokument einer Version des Dokuments in einer Form entspricht als der Hash-Wert, der in Verbindung mit dem Dokument gespeichert wurde, erzeugt wurde, durch Vergleichen des neu berechneten Hash-Werts mit dem Hash-Wert, der in dem Dokumentenspeicher in Verbindung mit dem Dokument gespeichert war.

8. Verfahren nach Anspruch 7, wobei das Verfahren aufweist:
Erzeugen einer digitalen Signatur, wobei der private Schlüssel aus dem Zertifikatschlüsselpaar des Benutzers verwendet wird durch
Berechnen eines Hash-Werts des Dokuments und
Verschlüsseln des aus dem Dokument berechneten Hash-Werts mit dem öffentlichen Schlüssel,
Speichern der digitalen Signatur in Verbindung mit dem verschlüsselten Dokument in dem Dokumentenspeicher (2),
Abrufen der dem Dokument zugeordneten digitalen Signatur aus dem Dokumentenspeicher (2),
Neuberechnen des Hash-Werts aus dem entschlüsselten Dokument,
Neuerzeugen der digitalen Signatur durch Verschlüsseln des neu berechneten Hash-Werts mit dem öffentlichen Schlüssel des zweiten privaten/öffentlichen Dokumentenschlüsselpaars des Benutzers und
Vergleichen der abgerufenen digitalen Signatur mit der neu erzeugten digitalen Signatur und wenn die neu erzeugte digitale Signatur im Wesentlichen die gleiche ist wie die abgerufene digitale Signatur, Validieren der abgerufenen digitalen Signatur als authentisch.

9. Client-Terminal (1), das in Verbindung mit einem Schlüsselspeicher (4) und einem Dokumentenspeicher (2) eines Dokumentensicherheitsverwaltungssystems betreibbar ist, wobei das Client-Terminal (1) so betreibbar ist, dass es Dokumente in dem Dokumentenspeicher (2) zum Verarbeiten durch einen Benutzer speichert und aus diesem abruft, wobei jeder Satz aus einem oder mehreren Dokumenten verschlüsselt wird, wobei der private Schlüssel eines zugeordneten Verschlüsselungsschlüsselpaars verwendet wird und mindestens eines der Verschlüsselungsschlüsselpaare einem Satz von zwei oder mehr der Dokumenten zugeordnet ist und wobei jeder Benutzer ein digitales Zertifikat besitzt, das ein Zertifikatschlüsselpaar umfasst und der Schlüsselspeicher (4) den privaten Schlüssel des mit dem öffentlichen Schlüssel des Zertifikatschlüsselpaars, das dem Benutzer zugeordnet ist, verschlüsselten Verschlüsselungsschlüsselpaars aufweist, wobei das Client-Terminal (1) von dem Benutzer mit dem privaten Schlüssel des Zertifikatschlüsselpaars versehen ist, wobei das Client-Terminal (1) so betreibbar ist,
dass es den privaten Schlüssel des Verschlüsselungsschlüsselpaars verschlüsselt, wobei der private Schlüssel des Zertifikatschlüsselpaars verwendet wird,
dass es das verschlüsselte Dokument aus dem Dokumentenspeicher (2) abruft, dass es das Dokument entschlüsselt, wobei der entschlüsselte private Schlüssel des Verschlüsselungsschlüsselpaars verwendet wird,
wobei das Client-Terminal **dadurch gekennzeichnet ist, dass** es so betreibbar ist, dass es einen Hash-Wert des Dokuments erzeugt, nachdem das Dokument von einem Benutzer erzeugt oder bearbeitet wurde,
dass es den Hash-Wert mit dem privaten Schlüssel des Verschlüsselungsschlüsselpaars verschlüsselt und
dass es den verschlüsselten Hash-Wert mit dem verschlüsselten Dokument in dem Dokumentenspeicher (2) speichert und das Client-Terminal, wenn es das Dokument aus dem Dokumentenspeicher (2) abruft, so betreibbar ist,
dass es den Hash-Wert, der in Verbindung mit dem Dokument gespeichert war, entschlüsselt,
dass es den Hash-Wert aus dem aus dem Dokumentenspeicher (2) abgerufenen entschlüsselten Dokument neu berechnet und
dass es verifiziert, dass das Dokument einer Version des Dokuments in einer Form entspricht als der Hash-Wert, der in Verbindung mit dem Dokument gespeichert war, erzeugt wurde, durch Vergleichen des neu berechneten Hash-Werts mit dem Hash-Wert, der in dem Dokumentenspeicher in Verbindung mit dem Dokument gespeichert war.

10. Client-Terminal (1) nach Anspruch 9, wobei das Client-Terminal (1) so betreibbar ist, dass es eine Datei, die ein Dokument darstellt, erzeugt,
dass es die Datei mit dem öffentlichen Schlüssel eines oder mehrerer Verschlüsselungsschlüsselpaare verschlüsselt und
dass es die verschlüsselte Datei in dem Dokumentenspeicher (2) speichert.

## Revendications

1. Système de gestion de la sécurité de documents pour gérer une gestion sécurisée de documents ou de fichiers de données pour des utilisateurs, le système de gestion de documents comprenant
un référentiel de documents (2) offrant une possibilité de stockage de fichiers de données représentant les documents,
un référentiel de clés (4) pour stocker une clé publique d'une ou plusieurs paires de clés de chiffrement, chacune des paires de clés de chiffrement étant associée à un ou plusieurs des documents stockés dans le référentiel de documents, au moins l'une des paires de clés de chiffrement étant associée à un ensemble de deux documents ou plus stockés dans le référentiel de documents (2), et chaque document stocké dans le référentiel de documents (2) est chiffré au moyen de la clé publique de la paire de clés de chiffrement associée au document, et
une pluralité de terminaux clients (1) utilisables pour récupérer les documents à partir du référentiel de documents (2) afin qu'ils soient traités par un utilisateur, dans lequel chaque utilisateur est muni d'un certificat numérique comprenant une paire de clés de certificat, et le référentiel de clés (4) inclut la clé privée de la paire de clés de chiffrement chiffrée au moyen de la clé publique de la paire de clés de certificat associée à l'utilisateur, les terminaux clients (1) étant utilisables avec la clé privée de la paire de clés de certificat,
pour déchiffrer la clé privée de la paire de clés de chiffrement en utilisant la clé privée de la paire de clés de certificat,
pour récupérer le document chiffré à partir du référentiel de documents (2), et
pour déchiffrer le document en utilisant la clé privée déchiffrée de la paire de clés de chiffrement pour accéder au document ;
dans lequel le système de gestion de la sécurité de documents est **caractérisé en ce que** les terminaux clients (1) sont utilisables
pour générer une empreinte numérique du document après que le document a été créé ou mis en forme par un utilisateur,
pour chiffrer l'empreinte numérique avec la clé privée de la paire de clés de chiffrement, et
pour enregistrer l'empreinte numérique chiffrée avec le document chiffré dans le référentiel de documents (2), et le terminal client est utilisable lors de la récupération du document dans le référentiel de documents (2),
pour déchiffrer l'empreinte numérique qui a été enregistrée en association avec le document,
pour recalculer l'empreinte numérique à partir du document déchiffré et récupéré dans le référentiel de documents (2), et
pour vérifier que le document correspond à une version du document sous une forme correspondant au moment où l'empreinte numérique qui a été enregistrée en association avec le document a été produite, en comparant l'empreinte numérique recalculée avec l'empreinte numérique qui a été enregistrée dans le référentiel de documents (2) en association avec le document.

2. Système de gestion de la sécurité de documents selon la revendication 1, dans lequel le terminal client (1) est utilisable
pour générer une signature numérique en utilisant la clé privée de l'utilisateur de la paire de clés de certificat, en
calculant une empreinte numérique du document, et
en chiffrant l'empreinte numérique calculée à partir du document avec la clé privée, et
en enregistrant la signature numérique en association avec le document chiffré dans le référentiel de documents (2), et le terminal client (1) est utilisable lors de la récupération du document référentiel de documents (2) pour récupérer la signature numérique associée au document à partir du référentiel de documents,
pour recalculer l'empreinte numérique à partir du document déchiffré,
pour extraire l'empreinte numérique de la signature numérique en déchiffrant l'empreinte numérique chiffrée dans la signature
pour comparer l'empreinte numérique extraite avec l'empreinte numérique générée à nouveau, et si l'empreinte numérique générée à nouveau est identique à l'empreinte numérique extraite, valider la signature numérique récupérée comme étant authentique.

3. Système de gestion de la sécurité de documents selon la revendication 1 ou la revendication 2, dans lequel la signature numérique est une signature numérique indépendante générée en fonction de la norme 7 de certificat à clé publique.

4. Système de gestion de la sécurité de documents selon l'une quelconque des revendications précédentes, dans lequel le terminal client (1) est utilisable pour générer une référence temporelle indiquant une heure et/ou une date auxquelles le document a été créé et/ou mis en forme,
pour chiffrer la référence temporelle avec la paire de clés de chiffrement à clé publique, et
pour communiquer la référence temporelle chiffrée au référentiel de documents (2), le référentiel de documents (2) pouvant être utilisé pour enregistrer la référence temporelle avec le document dans le référentiel de documents (2).

5. Système de gestion de la sécurité de documents selon l'une quelconque des revendications précédentes, dans lequel le référentiel de clés (4) est utilisable pour stocker la clé publique desdites une ou plusieurs paires de clés de chiffrement dans le référentiel de clés (4),
pour chiffrer la clé privée desdites une ou plusieurs paires de clés de chiffrement avec la clé publique de la paire de clés de certificat associée à un utilisateur, et
pour stocker la clé privée chiffrée desdites une ou plusieurs paires de clés de chiffrement dans le référentiel de clés (4).

6. Système de gestion de la sécurité de documents selon l'une quelconque des revendications précédentes, dans lequel le référentiel de clés (4) est agencé pour stocker chaque clé privée desdites une ou plusieurs paires de clés de chiffrement chiffrée avec une clé publique d'une paire de clés de certificat d'un gestionnaire de clés.

7. Procédé de gestion sécurisée de documents pour des utilisateurs, le procédé comprenant
le stockage de fichiers de données représentant des documents dans un référentiel de documents (2),
le stockage d'une clé publique d'une ou plusieurs paires de clés de chiffrement dans un référentiel de clés (4), chacune des paires de clés de chiffrement étant associée à un ou plusieurs des documents stockés dans le référentiel de documents (2), au moins l'une des paires de clés de chiffrement étant associée à un ensemble de deux documents ou plus stockés dans le référentiel de documents (2), et chaque document stocké dans le référentiel de documents (2) étant chiffré avec la clé publique de la paire de clés de chiffrement associée au document,
le stockage et/ou la récupération des documents à partir du référentiel de documents (2) afin qu'ils soient traités par un utilisateur, dans lequel le référentiel de clés (4) inclut la clé privée de la paire de clés de chiffrement chiffrée au moyen de la clé publique d'une paire de clés de certificat numérique associée à l'utilisateur, le procédé incluant le déchiffrement de la clé privée de la paire de clés de chiffrement en utilisant la clé privée de la paire de clés de certificat,
la récupération du document chiffré à partir du référentiel de documents (2), et
le déchiffrement du document en utilisant la clé privée déchiffrée de la première paire de clé privée / clé publique du document ; le procédé étant **caractérisé en ce qu'**il comprend
la génération d'une empreinte numérique du document après que le document a été créé ou mis en forme par un utilisateur,
le chiffrement de l'empreinte numérique avec la clé privée de la première paire de clé privée / clé publique du document,
l'enregistrement de l'empreinte numérique chiffrée avec le document chiffré dans le référentiel de documents (2),
le déchiffrement de l'empreinte numérique qui a été enregistrée en association avec le document,
le fait de recalculer l'empreinte numérique à partir du document déchiffré récupéré à partir du référentiel de documents (2), et
la vérification du fait que le document correspond à une version du document sous une forme correspondant au moment où l'empreinte numérique qui a été enregistrée en association avec le document a été produite, en comparant l'empreinte numérique recalculée avec l'empreinte numérique qui a été enregistrée dans le référentiel de documents en association avec le document.

8. Procédé selon la revendication 7, le procédé incluant la génération d'une signature numérique en utilisant la clé privée de l'utilisateur de la paire de clés de certificat, en
calculant une empreinte numérique du document, et
en chiffrant l'empreinte numérique calculée à partir du document avec la clé publique,
en enregistrant la signature numérique en association avec le document chiffré à partir du référentiel de documents (2),
en récupérant la signature numérique associée au document dans le référentiel de documents (2),
en recalculant l'empreinte numérique à partir du document déchiffré,
en générant à nouveau la signature numérique en chiffrant l'empreinte numérique recalculée avec la clé publique de l'utilisateur de la deuxième paire de clé privée / clé publique du document, et
en comparant la signature numérique récupérée avec la signature numérique générée à nouveau, et si la signature numérique générée à nouveau est sensiblement identique à la signature numérique récupérée, en validant la signature numérique récupérée comme étant authentique.

9. Terminal client (1) utilisable en combinaison avec un référentiel de clés (4) et un référentiel de documents (2) d'un système de gestion de la sécurité de documents, le terminal client (1) étant utilisable pour stocker et récupérer des documents dans le référentiel de documents (2) afin qu'ils soient traités par un utilisateur, dans lequel chaque ensemble d'un ou plusieurs documents est chiffré en utilisant la clé privée d'une paire associée de clés de chiffrement, et au moins l'une des paires de clés de chiffrement est associée à un ensemble de deux documents ou plus, et dans lequel chaque utilisateur possède un certificat numérique comprenant une paire de clés de certificat, et le référentiel de clés (4) inclut la clé privée de la paire de clés de chiffrement chiffrée avec la clé publique de la paire de clés de certificat associée à l'utilisateur, le terminal client (1) recevant de l'utilisateur la clé privée de la paire de clés de certificat, le terminal client (1) étant utilisable pour déchiffrer la clé privée de la paire de clés de chiffrement en utilisant la clé privée de la paire de clés de certificat,
pour récupérer le document chiffré à partir du référentiel de documents (2), pour déchiffrer le document en utilisant la clé privée déchiffrée de la paire de clés de chiffrement ;
le terminal client étant **caractérisé en ce qu'**il peut être utilisé pour générer une empreinte numérique du document après que le document a été créé ou mis en forme par un utilisateur,
pour chiffrer l'empreinte numérique avec la clé privée de la paire de clés de chiffrement, et
pour enregistrer l'empreinte numérique chiffrée avec le document chiffré dans le référentiel de documents (2), et le terminal client est utilisable lors de la récupération du document à partir du référentiel de documents (2) pour déchiffrer l'empreinte numérique qui a été enregistrée en association avec le document,
pour recalculer l'empreinte numérique à partir du document déchiffré et récupéré à partir du référentiel de documents (2), et
pour vérifier que le document correspond à une version du document sous une forme correspondant au moment où l'empreinte numérique qui a été enregistrée en association avec le document a été produite, en comparant l'empreinte numérique recalculée avec l'empreinte numérique qui a été enregistrée dans le référentiel de documents en association avec le document.

10. Terminal client (1) selon la revendication 9, dans lequel le terminal client (1) peut être utilisé
pour créer un fichier de données représentant le document,
pour chiffrer le fichier de données avec la clé publique d'une ou plusieurs paires de clés de chiffrement, et
pour stocker le fichier de données chiffré dans le référentiel de documents (2).
